# EUROPEAN PATENT APPLICATION

(11) **EP 1 744 114 A2**
(43) Date of publication of application: **17.01.2007**
(21) Application number: 06253259.3
(22) Date of filing: 23.06.2006
(51) Int. Cl.: F25D 23/06

(54) **Inner liner of refrigerator and mold for forming the same**

(30) Priority: 04.07.2005 KR 20050059523
(71) Applicant: Samsung Gwangju Electronics Co., Ltd., Gwangju-city (KR)
(72) Inventor: Park, Sang Sul, Gwangju-City (KR); You, Jea Houng, Gwangju-City (KR); Jung, Byoung Won, Gwangju-City (KR); Song, Soon Chel, No. 101-1607, Gwangju-City (KR)
(74) Representative: Pratt, David Martin

(57) **Abstract**

An inner liner (20) of a refrigerator may include: the inner liner (20) positioned inside an outer liner (10) to define an inner space for a storage compartment (2a,2b) and molded by attaching a plate (40) to an outer surface of a mold (50) via vacuum adsorption, wherein an edge (25) of the inner liner (20) is provided with a reinforcing part (25a) to prevent the edge (25) from being deformed when injecting a heat insulating foam (30), the reinforcing part (25a) being integrally formed with the inner liner (20).

## Description

### BACKGROUND OF THE INVENTION

### Field of the Invention

The present invention relates to a refrigerator, and, more particularly, to an inner liner of a refrigerator and a mold for forming the same.

### Description of the Related Art

Generally, a refrigerator includes cooling cycle components to refrigerate and freeze food stored in storage compartments. The refrigerator includes a body which is open at a front side and has the storage compartments defined therein, and doors which are provided at the front side of the body to open or close the storage compartments.

The body includes an outer liner forming an outer side of the refrigerator, an inner liner inside the outer liner to define an inner space which forms the storage compartments, and a heat insulating foam filled between the inner and outer liners for heat insulation of the storage compartments.

The inner liner is typically produced by a vacuum molding method, by which a plastic plate is attached to an outer surface of a mold via vacuum adsorption. For example, Korean Patent Laid-open Publication No. 1998-014846 describes an inner liner of a refrigeration produced by such a vacuum molding method. The inner liner of the refrigerator is formed to have a cabinet shape with its inner space defining a storage compartment by attaching a heated plastic plate to an outer surface of a mold configured to have an inner shape of the storage compartment via vacuum adsorption.

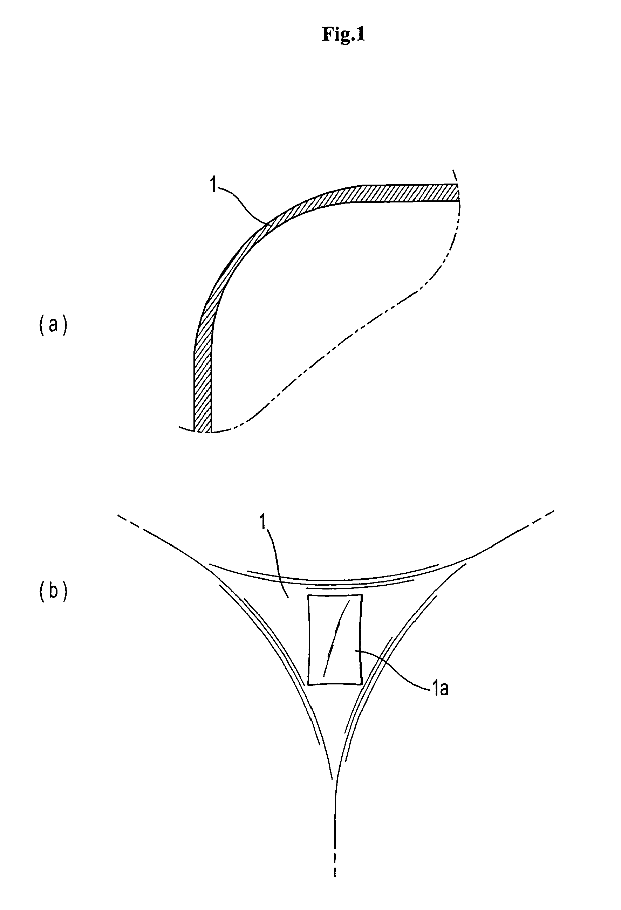

However, according to this method, an edge 1 formed between plural faces is excessively stretched in comparison to other parts, as shown in FIG 1(a), during molding of the inner liner. As a result, the edge 1 is significantly thinner than the other parts. When injecting a heat insulating foam into a gap between the inner and outer liners, the edge 1 cannot withstand an injection pressure of the heat insulating foam, and is deformed. Deformation of the inner liner is significant particularly around the edge 1 of an outer periphery, which is formed by three faces and thus is more significantly stretched, in comparison to edges which are formed by two faces.

According to the conventional technique, to prevent deformation of the edge 1 of the inner liner, a plastic reinforcing sheet 1a is attached to an outer surface of the edge 1 of the inner liner to thicken the edge 1 after molding the inner liner, as shown in FIG 1(b). However, in this case, addition of the reinforcing sheet 1a increases both material costs and the number of required procedures.

### SUMMARY OF THE INVENTION

In light of the above-described difficulties, the present invention provides an inner liner of a refrigerator, which includes: the inner liner positioned inside an outer liner to define an inner space for a storage compartment and molded by attaching a plate to an outer surface of a mold via vacuum adsorption, wherein an edge of the inner liner is provided with a reinforcing part to prevent the edge from being deformed when injecting a heat insulating foam, the reinforcing part being integrally formed with the inner liner.

Another non-limiting aspect of the present invention provides a refrigerator that includes: a body; an outer liner configured to form an outer surface of the body; an inner liner configured to form an inner surface of the body; and means for preventing deformation of the inner liner.

Yet another aspect of the present invention provides a refrigerator, including: a body; an outer liner configured to form an outer surface of the body; an inner liner configured to form an inner surface of the body; and means for preventing deformation of the inner liner.

### BRIEF DESCRIPTION OF THE DRAWINGS

These and/or other aspects and advantages of the invention will become apparent and more readily appreciated from the following description of the embodiments, taken in conjunction with the accompanying drawings, in which:
FIG 1(a) is a cross-sectional view illustrating an edge of an inner liner of a refrigerator, and FIG. 1(b) is a perspective view illustrating a reinforcing sheet attached to an outer surface of the edge of the inner liner;
FIG 2 is an exploded perspective view illustrating the configuration of a body of a refrigerator in accordance with a non-limiting aspect of the present invention;
FIG 3 is a cross-sectional view schematically illustrating the refrigerator in accordance with a non-limiting aspect of the present invention;
FIG 4 is an enlarged perspective view of Part A shown in FIG 2;
FIG 5 is a perspective view illustrating the configuration of a mold for forming an inner liner in accordance with a non-limiting aspect of the present invention;
FIG 6 is an enlarged perspective view of Part B shown in FIG 4;
FIGS. 7(a) to 7(d) are views illustrating the steps of forming the inner liner of the refrigerator in accordance with a non-limiting aspect of the present invention;
FIGS. 8(a) and 8(b) are cross-sectional views illustrating an edge of an inner liner of a refrigerator in accordance with a non-limiting embodiment of the present invention, in which FIG 8(a) shows a plate attached to a mold via vacuum adsorption, and FIG 8(b) shows a heat insulating foam injected into a gap between the inner liner and an outer liner; and
FIGS. 9(a) and 9(b) are cross-sectional views illustrating an edge of an inner liner of a refrigerator in accordance with another non-limiting embodiment of the present invention, in which FIG. 9(a) shows a plate attached to a mold via vacuum adsorption, and FIG 9(b) shows a heat insulating foam injected into a gap between the inner liner and an outer liner.

### DETAILED DESCRIPTION OF THE EMBODIMENTS

Reference will now be made in detail to the embodiments of the present invention, examples of which are illustrated in the accompanying drawings. In the figures, like numbers refer to like elements throughout.

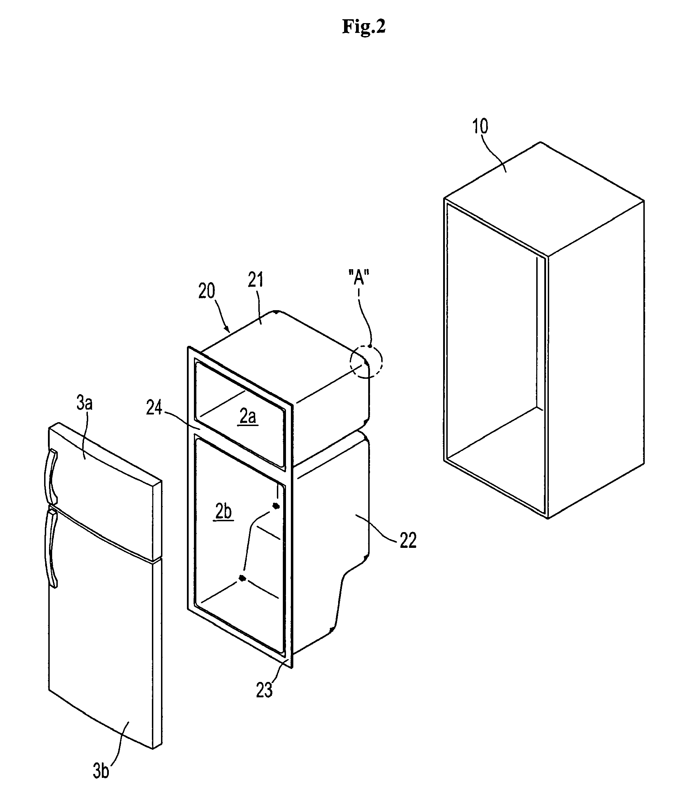

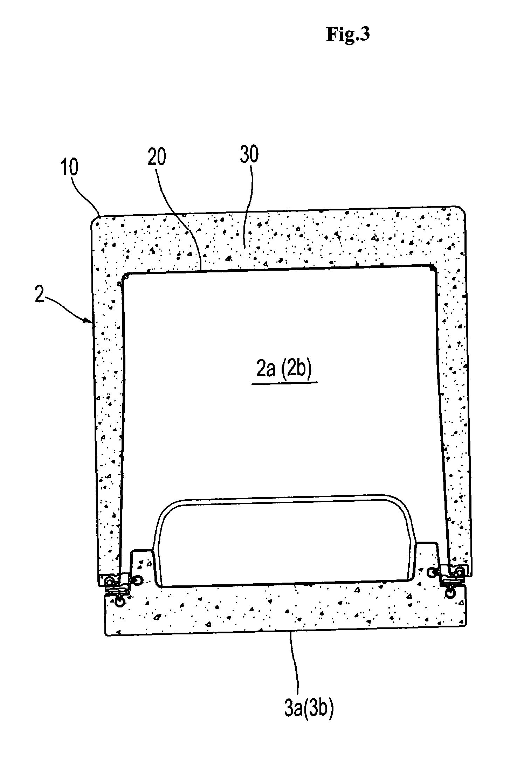

As shown in FIGS. 2 and 3, a refrigerator according to a non-limiting aspect of the present invention may include body 2 having storage compartments 2a and 2b, as well as doors 3a and 3b coupled to the front side of the body 2 to open or close the storage compartments 2a and 2b. The doors 3a and 3b may form at least a portion of an outer appearance of the refrigerator together with the body 2.

The storage compartments 2a and 2b may be partitioned from each other, and may include a freezer compartment 2a at an upper portion of the refrigerator and a refrigerating compartment 2b at a lower portion. The doors 3a and 3b may include a freezer compartment door 3a to open or close the freezer compartment 2a, and a refrigerating compartment door 3b adapted to open or close the refrigerating compartment 2b.

The body 2 may include a metallic outer liner 10 adapted to form an outer side of the body 2, a plastic inner liner 20 positioned inside the outer liner 10 to define an inner space for the storage compartments 2a and 2b, and a heat insulating foam 30 filled between the inner and outer liners 20 and 30 for insulation of the storage compartments 2a and 2b. The inner liner 20 may be integrally formed with a first cabinet 21 formed at an upper portion. The first cabinet 21 may include an inner space to define the freezer compartment 2a. The inner liner 20 may also be integrally formed with a second cabinet 22 at a lower portion and having an inner space to define the refrigerating compartment 2b. The inner liner 20 may also be formed with a flange 23 around an outer periphery of a front side, such that the flange of the inner liner 20 is supported by an outer periphery of an open front side of the outer liner 10. A connecting portion 24 between the first and second cabinets 21 and 22 may also be included.

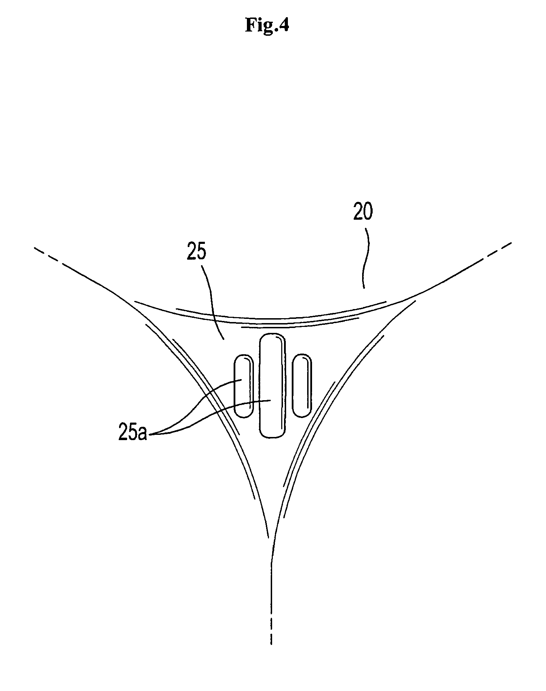

As shown in FIG 4, a reinforcing part 25a may be provided to edges 25 of the inner liner 20, at least some of which may be formed in a round shape having three faces. The edges 25 may also outwardly protrude. Other edges of the inner liner 20 may or may not have three faces. The reinforcing part 25a may be integrally formed with the inner liner 20 to prevent the edges 25 from being deformed by injection pressure of the heat insulating foam 30 when injecting the heat insulating foam 30 into a gap between the outer and inner liners.

The reinforcing part 25a may be configured to reinforce rigidity of an associated edge 25 of the inner liner 20, and may prevent the edge 25 from being deformed when injecting the heat insulating foam 30. In addition, the reinforcing part 25a may be integrally formed with the inner liner 20 when forming the inner liner 20, thereby allowing effective manufacturing of the inner liner 20 without requiring additional costs or processes for forming the reinforcing part 25a. In this non-limiting embodiment, the reinforcing part 25a may be provided as a bead outwardly raised from the inner liner 20, and may include a plurality of reinforcing elements separated from each other by a predetermined distance such that the reinforcing elements may be uniformly formed over part or all of each edge 25.

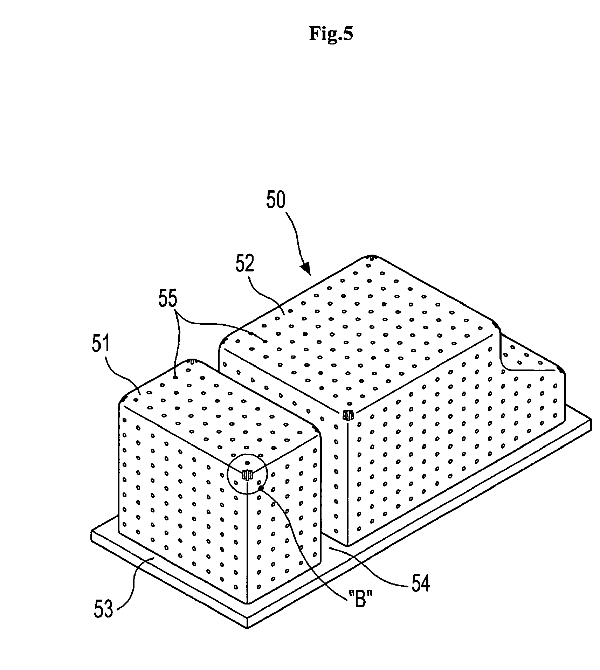

The inner liner 20 may be formed by attaching a plastic plate 40 to an outer surface of a mold 50 which may have a shape corresponding to an inner surface of the inner liner 20. The reinforcing part 25a may also be formed simultaneously during the process of forming the inner liner 20. The process of forming the inner liner 20 will be described with reference to FIGS. 5 to 7 as follows.

First, as shown in FIG 5, the mold 50 may include a first body 51 configured to form the first cabinet 21, a second body 52 configured to form the second cabinet 22, a flange-molding part 53 configured to form the flange 23, and a connecting part-molding part 54 configured to form the connecting portion 24. The outer surface of the mold 50 may have a shape corresponding to the inner surface of the inner liner 20 defining the storage compartments 2a and 2b. The flange-molding part 53 and the connecting part-molding part 54 may have shapes corresponding to the flange-molding part 53 and the connecting portion 24. The mold 50 may be formed with a large number of air holes 55 throughout.

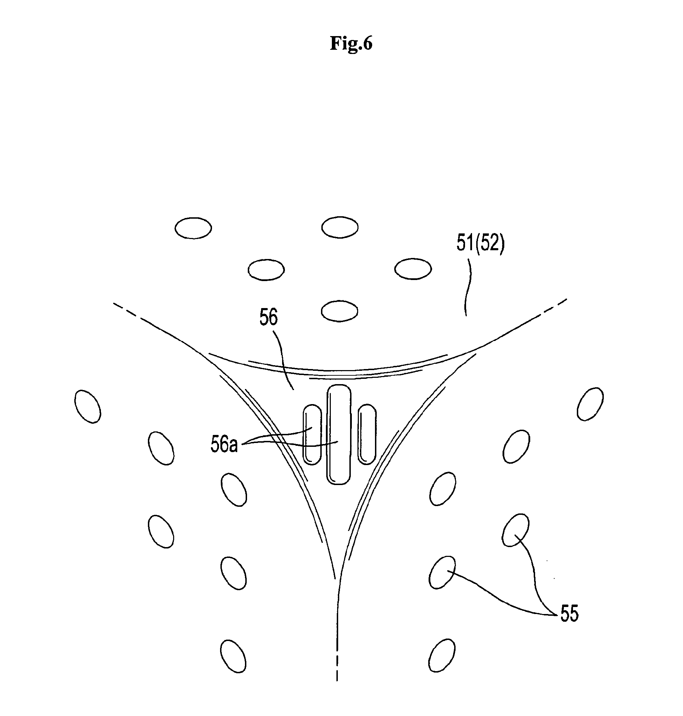

In addition, as shown in FIG 6, the mold 50 may have a reinforcing part/molding component 56a, which may be integrally formed with an outer surface of each edge 56 of the mold 50 corresponding to each edge 25 of the inner liner 20 to form the reinforcing part 25a. In this non-limiting embodiment, when the reinforcing elements of the reinforcing part 25a are implemented by raised beads, the reinforcing part-molding component 56a may be implemented by a plurality of protrusions, and may have a shape corresponding to the reinforcing part 25a. As for the reinforcing elements, the plurality of protrusions may be spaced a predetermined distance from each other, and may be uniformly disposed over a portion of or the entire region of each edge 56 of the mold 50.

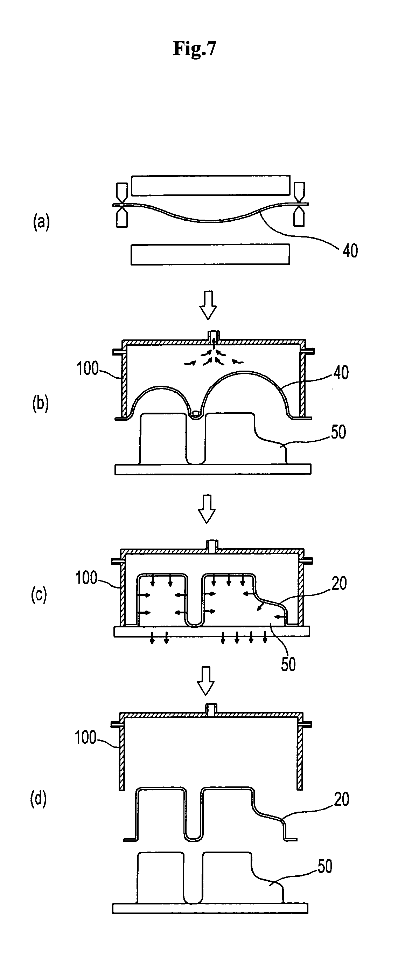

In order to form the inner liners, a plate 40 may be softened for easy molding, for example, by heating. The plate 40 may be positioned below a vacuum molding apparatus 100, as shown in FIG 7(a). Then, as shown in FIG 7(b), after fixing both sides and a central portion of the plate 40 which will form the connecting portion 24, air above the plate may be extracted out of the vacuum molding apparatus 100, and the plate 40 may then be deformed via suction force caused by extraction of the air, such that portions of the plate 40 corresponding to the first and second cabinets 21 and 22 may be stretched towards an upper side, thereby forming convex shapes.

In this state, as shown in FIG 7(c), air between the mold 50 and the plate 40 may be extracted through the air holes 55 of the mold 50 while the first and second bodies 51 and 52 of the mold 50 are inserted into inner spaces formed by the convex shapes of the plate. As a result, the plate 40 may be attached to the outer surface of the mold via vacuum adsorption as the air between the mold 50 and the plate 40 is removed, so that the plate 40 is molded to the inner liner 20. The inner liner 20 may have an inner surface corresponding to the outer surface of the mold 50.

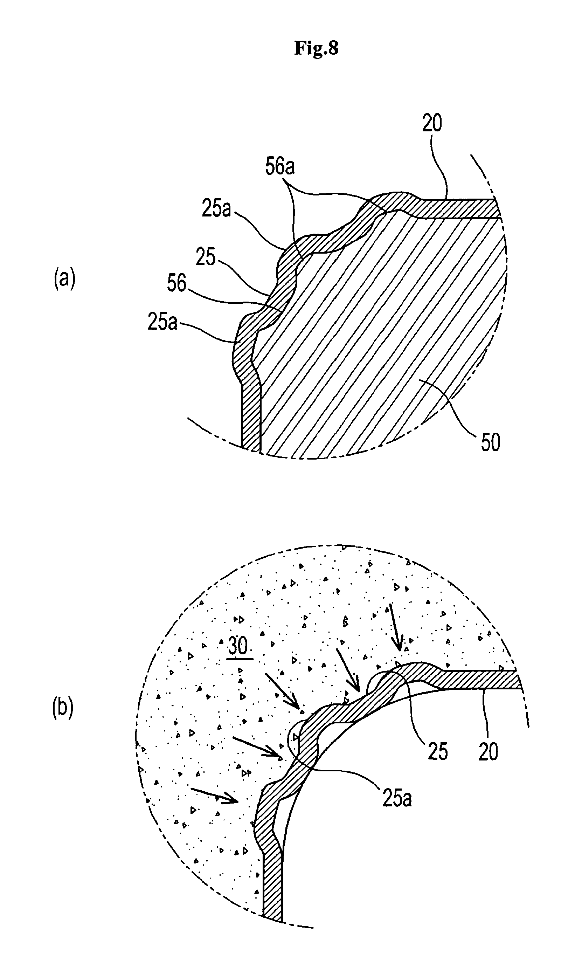

After the inner liner molded by the above process is separated from the mold 50 as shown in FIG 7(d), it may be processed to have installation holes for installing the inner liner inside the outer liner 10. Here, the reinforcing part 25a of the inner liner 20 may be formed on the inner liner 20 when attaching the plate 40 to the outer surface of the mold 50, as shown in FIG 7(c). In other words, as shown in FIG. 8(a), when the reinforcing part-molding component 56a on the outer surface of edges 56 of the mold 50 includes protrusions, portions of the plate 40 (attached to an outer surface of the edges 56 of the mold 50 by vacuum adsorption) may be compressed and outwardly raised by the reinforcing part-molding component 56a, thereby forming raised beads. These raised beads, in turn, may form at least a portion of the reinforcing part 25a.

In addition, at the vacuum adsorption step, since the reinforcing part 25a implemented by the raised beads reinforces the portions of the plate 40 which are proximate to the edges 25 of the inner liner 20, the elongation of the plate 40 having the raised beads formed thereon is remarkably reduced in comparison to the conventional technique, even though the plate 40 is continuously brought into tight contact with the outer surface of the mold 50 until completion of the vacuum adsorption. By this process, each edge 25 of the inner liner 20 having reinforcing part 25a can be formed to have a larger thickness than that of the conventional inner liner.

Accordingly, since the inner liner 20 formed by the process as described above may include reinforcing part 25a serving to increase the rigidity of the inner liner, and the edge 25 having the reinforcing part 25 may be thicker than that of the conventional inner liner, the edge 25 may be more effectively prevented from being deformed by an injection pressure of the heat insulating foam 30 filled between the inner and outer liners 20 and 10 as shown in FIG 8(b).

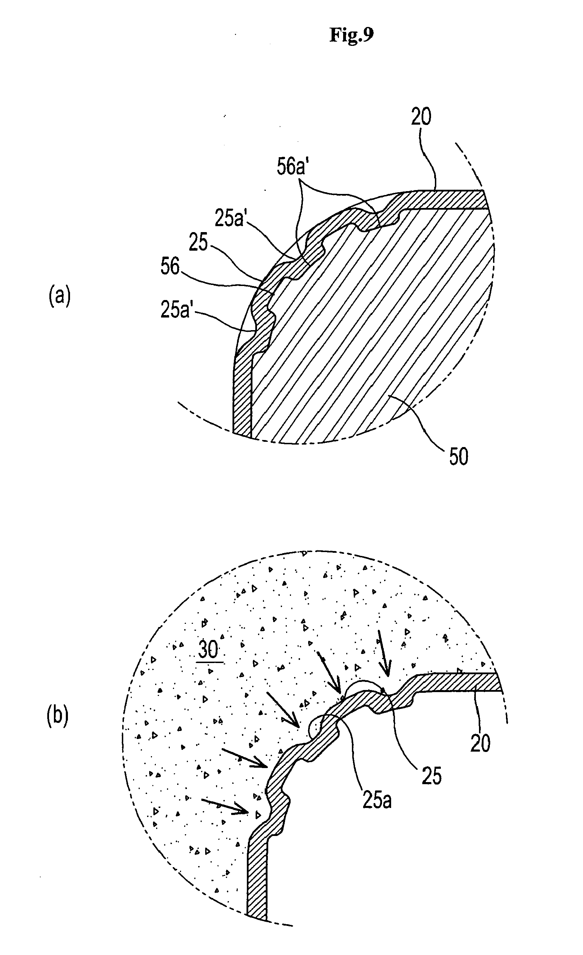

Meanwhile, according to a second non-limiting embodiment of the invention, a reinforcing part 25a' may be implemented by depressed beads, as shown in FIGS. 9(a) and 9(b). In this regard, in order to form reinforcing part 25a', a reinforcing part-molding component 56a' provided to an outer surface of the edge 56 of the mold 50 may be implemented by grooves corresponding to the shape of the reinforcing part 25a'.

As in the non-limiting first embodiment, the reinforcing part 25a' may increase the rigidity of each edge 25 of the inner liner 20 while reducing elongation of a portion of the plate 40 formed to the edge 25 of the inner liner 20 during the vacuum adsorption step to form the inner liner 20, so that the edge 25 of the inner liner having the reinforcing part 25a' may be significantly thicker than that of the conventional inner liner. Accordingly, the second non-limiting embodiment achieves the same effects as those of the first embodiment.

As apparent from the above description, according to the present invention, the inner liner may be reinforced by a reinforced part formed on each edge of the inner liner using the reinforced part-molding component of the mold, so that the edges of the inner liner may be prevented from being deformed by injection pressure of the heat insulating foam which is filled between the inner and outer liners. Since the reinforcing part may be integrally formed with the inner liner when forming the inner liner, it is possible to produce the inner liner effectively without requiring additional costs or processes for forming the reinforcing part.

Although a few embodiments of the present invention have been shown and described, it would be appreciated by those skilled in the art that various modifications, additions and substitutions may be made in these embodiments without departing from the principle and spirit of the invention, the scope of which is defined in the claims and their equivalents.

## Claims

1. An inner liner of a refrigerator, comprising:
the inner liner positioned inside an outer liner to define an inner space for a storage compartment and molded by attaching a plate to an outer surface of a mold via vacuum adsorption,
wherein an edge of the inner liner is provided with a reinforcing part to prevent the edge from being deformed when injecting a heat insulating foam, the reinforcing part being integrally formed with the inner liner.

2. The inner liner according to claim 1, wherein at least one edge of the inner liner comprises a round-shaped edge formed by at least three faces.

3. The inner liner according to claim 1, wherein the reinforcing part comprises at least one raised bead.

4. The inner liner according to claim 1, wherein the reinforcing part comprises at least one recessed bead.

5. The inner liner according to claim 3, wherein the reinforcing part comprises a plurality of reinforcing elements separated by at least one predetermined distance.

6. A refrigerator, comprising:
a body;
an outer liner configured to form an outer surface of the body;
an inner liner configured to form an inner surface of the body; and
means for preventing deformation of the inner liner.

7. The refrigerator according to claim 6, further comprising an insulating foam positioned proximate to the outer liner and the inner liner.

8. The refrigerator according to claim 7, wherein the insulating foam includes a heat insulating foam.

9. The refrigerator according to claim 8, wherein the insulating foam is positioned between the outer liner and the inner liner.

10. The refrigerator according to claim 7, wherein the insulating foam is positioned between the outer liner and the inner liner.

11. A refrigerator, comprising:
a body;
an outer liner configured to form an outer surface of the body;
an inner liner configured to form an inner surface of the body; and
means for preventing deformation of the inner liner.

12. The refrigerator according to claim 1, further comprising an insulating foam positioned proximate to the outer liner and the inner liner.

13. The refrigerator according to claim 12, wherein the insulating foam includes a heat insulating foam.

14. The refrigerator according to claim 13, wherein the insulating foam is positioned between the outer liner and the inner liner.

15. The refrigerator according to claim 12, wherein the insulating foam is positioned between the outer liner and the inner liner.
